# EUROPEAN PATENT SPECIFICATION

(11) **EP 3 696 028 B1**
(45) Date of publication and mention of the grant of the patent: **23.06.2021**
(21) Application number: 19157338.5
(22) Date of filing: 15.02.2019
(51) Int. Cl.: B60R 21/18, B60R 21/233, B60R 21/2346

(54) **OCCUPANT RESTRAINT SYSTEM**
SYSTEM ZUR INSASSENZURÜCKHALTUNG
SYSTÈME DE RETENUE D'OCCUPANT

(43) Date of publication of application: 19.08.2020
(73) Proprietor: Autoliv Development AB, 447 83 Vargarda (SE)
(72) Inventor: ALENSPACH, Guillaume, 76116 Martainville Epreville (FR)
(74) Representative: AWA Sweden AB

(56) References cited:
- WO-A1-2013/107951
- US-A1- 2003 168 837
- US-A1- 2009 179 406
- US-A1- 2018 208 142

## Description

### Technical Field of the Invention

The present invention relates to an occupant restraint system comprising a vehicle seat, an inflator adapted for secure attachment to a vehicle seat, a first inflatable portion, a second inflatable portion, said first and second inflatable portions being releasably attachable to each other and forming a part of an inflatable cushion, and a first gas duct fluidly connecting said inflator to said second inflatable portion.

### Background Art

In collisions vehicle occupants are moved due to inertial forces. In order to minimize the risk of injuries to vehicle occupants in such collisions vehicles are provided with restraint systems, such as seat belts and airbags.

US 9,758,127 B1 shows a restraint system mounted to a vehicle seat. This system comprises a first retractor, a second retractor, a first webbing retractably coupled to the first retractor, a second webbing coupled to the second retractor, a first vest panel attached to the first webbing, and a second vest panel attached to the second webbing. The vest panels are inflatable and releasably attachable to each other. The system further comprises an inflator and fill lines arranged to supply each of the vest panels with e.g. inflation gas. Document WO 2013/107951 A1 discloses an occupant restraint system according to the preamble of claim 1.

It is however desired to provide a less complex and/or more reliable occupant restraint system.

### Summary of the Invention

It is an object of the present invention to provide an improved occupant restraint system.

This and other objects that will be apparent from the following summary and description are achieved by an occupant restraint system according to the appended claims.

The invention relates to an occupant restraint system defined by the features of claim 1.

The first gas duct enables the second inflatable portion to be positioned at a distance from an inflator. The second inflatable portion may thus be positioned to inflate at one side of the occupant although an inflator is positioned at the other side of the occupant. The second inflatable portion may thus be configured to be mounted at one side, e.g. the so called far side, of a vehicle seat, thereby forming a far side airbag, and the first inflatable portion may be configured to be mounted at another side, e.g. at the so called near side of a vehicle seat, thereby forming a near side airbag. Thanks to a shorter distance from a common inflator the first inflatable portion may thus be inflated slightly faster than the second inflatable portion.

The first gas duct, which is inflatable, may form part of an airbag formed from two panels, such as e.g. two fabric panels, which enables cost and time efficient manufacturing of the occupant restraint system. Furthermore, it provides for a robust and reliable solution, since no coupling device is needed between the gas duct supplying inflation gas to the second inflatable portion and the second inflatable portion.

A system that is very easy to manufacture and that facilitates to maintain a high level of quality in the manufacturing process is thus provided. Furthermore, a solution having few parts and a solution that facilitates assembly is provided.

The occupant restraint system of the present disclosure is integrated in a vehicle seat, whichs provides for a flexible system that may allow occupant protection in a variety of different seat positions and/or seat configurations. An occupant restraint system according to the present disclosure may thus be integrated in a vehicle seat and configured to protect an occupant seated in the vehicle seat in case of e.g. a collision with another vehicle or an obstacle.

By allowing the first gas duct to be mounted such that a portion thereof extends on the rear side of the seat to which the restraint system is mounted, a very reliable solution is provided. Furthermore, it enables a comfortable solution, since the gas duct may be positioned such that it does not interact with the occupant neither in an uniflated state nor in an inflated state.

According to one embodiment the length of said gas duct portion is at least 40 cm and more preferably at least 60 cm. The inflator may thus be positioned closer to one of the two inflatable portions than to the other one of the two inflatable portions. Thanks to shorter distance from the inflator, one of the inflatable portions may be inflated slightly faster than the other one.

According to one embodiment said first gas duct, said first inflatable portion and second inflatable portion together form an airbag.

According to one embodiment the occupant restraint system comprises a second inflatable gas duct fluidly connecting said inflator to said second inflatable portion in order to allow greater freedom in positioning of the inflator. The inflator may then be positioned symmetrically between the two inflatable portions.

According to one embodiment said second gas duct is shorter than said first gas duct.

According to one embodiment the occupant restraint system comprises a gas guide arranged to direct gas from the inflator into each of the first and second inflatable portions.

According to one embodiment the gas guide is configured to direct a larger amount of gas to one of said inflatable portions. This has the advatage that one of the two inflatable portions, that need to be in place first, may be inflated and pressurized to a working pressure slightly faster than the other one. Hence, thanks to shorter distance from the inflator and/or through a larger allocated flow by means of a gas guide, one of the inflatable portions may be inflated faster than the other one.

According to one embodiment the first and second inflatable portions are releasably attachable to each other by fastening means such as a zipper and/or a buckle. Alternatively, or in combination with such fastening means, other fastening means such as, e.g., snaps, buttons, hook-and-loop fasteners, magnetic fasteners and laces may be used.

According to one embodiment the occupant restraint system comprises a lap belt system, which may further improve the efficiency of the occupant protection system.

According to one embodiment the occupant restraint system comprises one and only one inflator. This embodiment has the advantage that a very cost efficient system, and a system having few parts and that is easy to mount may be provided.

These and other aspects of the invention will be apparent from and elucidated with reference to the claims and the embodiments described hereinafter.

### Brief Description of the Drawings

The invention will hereafter be described in more detail and with reference to the appended schematic drawings.
Fig. 1A is a perspective view an occupant restraint system according to a first embodiment of the present invention.
Fig. 1B is a perspective view and illustrates use of the occupant restraint system shown in Fig. 1A.
Fig. 2 is a top view and illustates an airbag of the occupant restraint system shown in Fig. 1A.
Fig. 3A is a perspective view and illustrates the airbag of the occupant restraint system shown in Fig. 1A in an inflated state.
Figs. 3B-C are perspective views and illustrate the occupant restraint system during inflation of an airbag thereof.
Fig. 4 is a perspective view and illustrates an occupant restraint system according to a second embodiment of the present invention.

### Detailed Description of Preferred Embodiments of the Invention

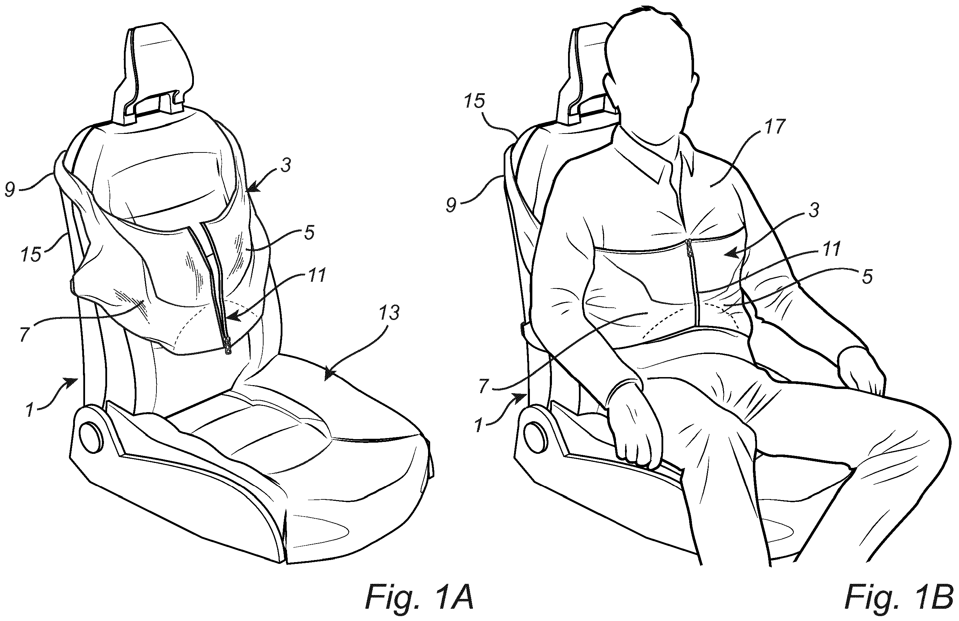

Fig. 1A illustrates a vehicle seat 1 provided with an occupant restraint system 3 according to a first embodiment of the present discloure.

The occupant restraint system 3 comprises an inflator (not shown here), a first inflatable portion 5, a second inflatable portion 7 and a gas duct 9. The first and second inflatable portions 5, 7 are releasably attachable to each other by means of a fastening device. In this embodiment, the first and second inflatable portions 5, 7 are releasably attachable to each other by means of a zipper 11. The vehicle seat 1 comprises a seat cushion 13 and a seatback 15.

Fig. 1B illustrates an occupant 17 seated in the vehicle seat 1 and fastened by the occupant restraint system 3. Then, i.e. when in use, the first inflatble portion 5 and the second inflatable portion 7 are attached to each other by means of the zipper 11 in order to encircle and restrain the occupant's chest.

Optionally, in addition to the the occupant restraint system 3, further occupant restraint system(s) may be used to further improve the occupant protection. For instance, a conventional seat belt system and/or an airbag system may be used in combination with the occupant restraint system 3 in order to further reduce the risk of injuries in case of a crash event.

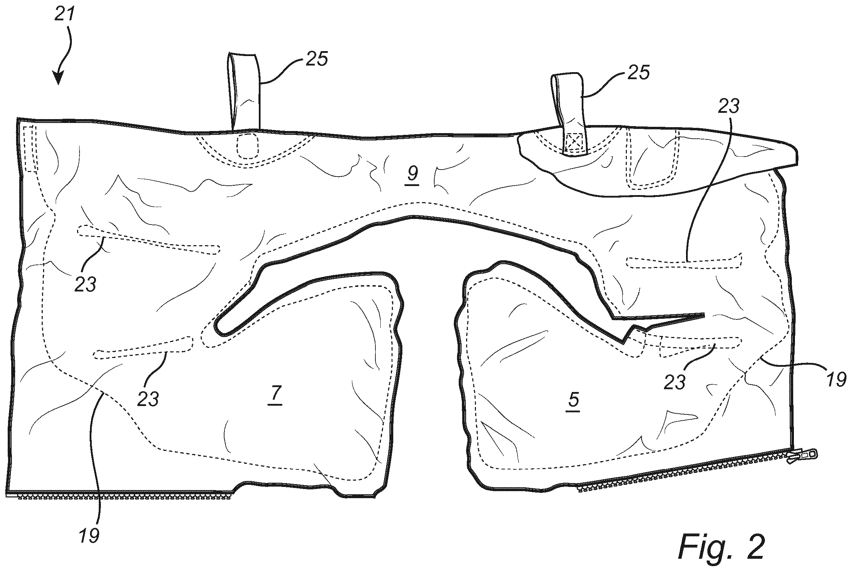

Now referring to Fig. 2, the first inflatable portion 5, the second inflatble portion 7 and the gas duct 9 are formed from two fabric panels interconnected along an airbag closing seam 19 to define an inflatable cushion 21, also referred to as an airbag. Also, the fabric panels are interconnected along further seams 23 in order to, upon inflation of the airbag 21, achieve a desired shape comprising several chambers shaped for different purposes.

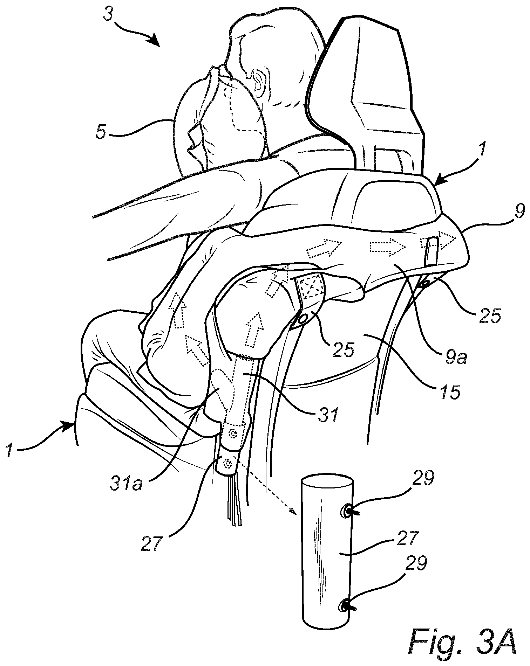

The airbag 21 may be provided with attachment portions, in the form of tab portions, for securely attaching the airbag 21 to a vehicle seat 1. By way of an example the airbag 21 may be provided with two upper attachment portions, in the form of upper tab portions 25, for securely attaching the upper part of the airbag 21 to the seatback 15 of the vehicle seat 1, as illustrated in Fig. 3A and with two lower attachment portions (not shown) for securely attaching the lower part of the airbag 21 to the seatback 15 of the vehicle seat 1.

Now referring to Fig. 3A, the occupant restraint system 3 further comprises an inflator in the form of an airbag inflator 27. The airbag inflator 27 is arranged to, upon an activation signal from a control unit (not shown) adapted to receive and process a signal from a sensor system (not shown), inflate and pressurize the airbag 21. The airbag inflator 27 is fluidly connected to the airbag 21 in a known manner. The airbag inflator 27 may be of any suitable design. Typically, such an inflator 27 comprises at least one pyrotechnical charge.

The inflator 27 is configured to be mounted to the vehicle seat 1 in a secure manner. To this end, in this embodiment, the inflator 27 is provided with threaded studs 29 which enable the inflator 27 to be securely attached to the vehicle seat 1 by means of nuts (not shown). Alternatively, the inflator may be securely attached to the vehicle seat 1 by means of an inflator bracket.

A gas guide, in the form of a fabric gas guide 31, is arranged inside the airbag 21 to direct inflation gas from the inflator 27 to each of the first inflatable portion 5 and the second inflatable portion 7. The airbag 21 is thus arranged to be inflated by means of the inflator 27 via the gas guide 31. During inflation of the airbag 21, the gas guide 31 directs gas into different parts of the airbag 21 in a desired manner. Gas is guided directly into the first inflatable portion 5 via a first branch 31a of the gas guide 31 and into the second inflatable portion 7 via a second branch 31b of the gas guide 31 and the gas duct 9, as illustrated by arrows in Fig. 3A.

As best illustrated in Fig. 3A, a portion 9a of the gas duct 9 extends on the rear side of the seatback 15. This means that the time needed to fully inflate the first inflatable portion 5 is slightly less than the time needed to fully inflate the second inflatable portion 7.

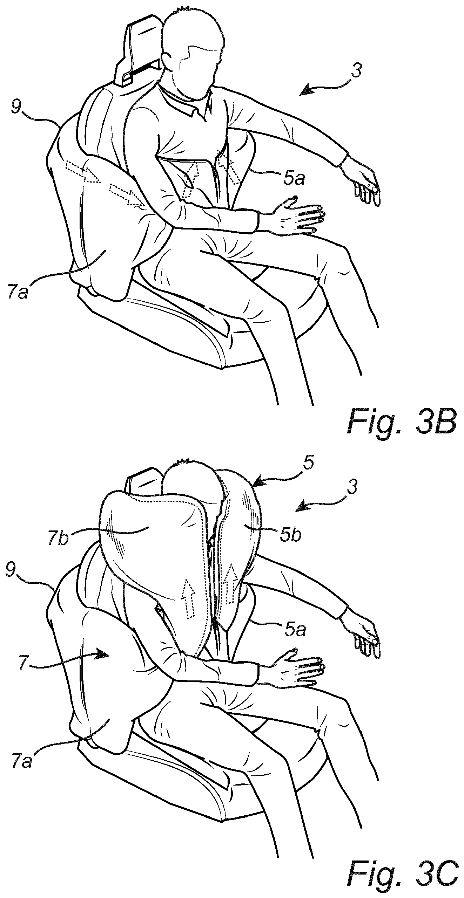

Now referring to Figs. 3B-C, each inflatable portion 5, 7 is designed such that a chest protection portion 5a, 7a is first deployed, as illustrated by arrows in Fig. 3B, and then a head protection portion 5b, 7b is deployed, as illustrated by arrows in Fig. 3C. Each of the first and second inflatable portions 5, 7 is thus adapted to offer frontal and lateral chest protection as well as frontal and lateral head protection. The occupant restraint system 3 of the present disclosure may thus prevent, or at least significantly reduce the risk of, severe chest and/or head injuries in a crash event.

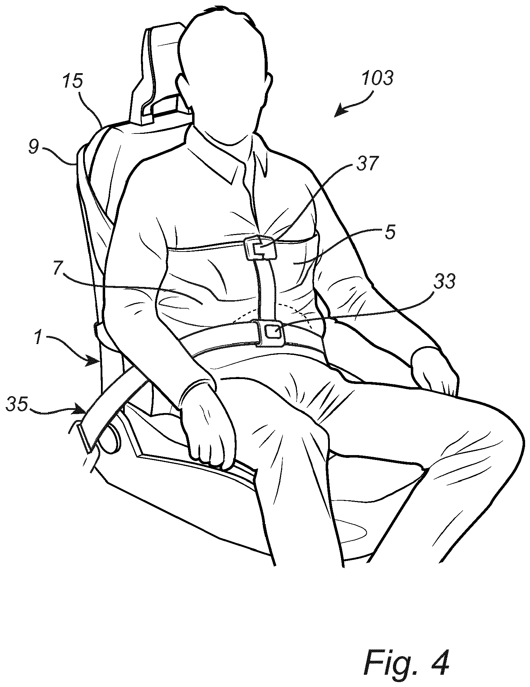

Fig. 4 illustrates an occupant restraint system 103 according to an alternative embodiment of the present invention. Many features disclosed in embodiment described hereinbefore are also present in the first embodiment with similar reference numerals identifying similar or same features. Having mentioned this, the description will focus on explaining the differing features of the second embodiment.

This embodiment differs from the one described hereinbefore in how the first and second inflatable portions 5, 7 are attachable to each other. In this embodiment the first inflatable portion 5 and the second inflatable portion 7 are attachable to each other by means of a lower buckle 33, which forms part of a lap belt system 35, and an upper buckle 37.

Hereinbefore, it has been described that the inflatable portions may be releasably attachable to each other by means of a zipper or by means of buckle(s). It is however appreciated that the inflatable portions may be attachable to each other by other fastening means such as, e.g., clips, snaps, buttons, hook-and-loop fasteners, magnetic fasteners and laces.

## Claims

1. Occupant restraint system (3; 103) comprising
a vehicle seat (1),
an inflator (27) adapted for secure attachment to said vehicle seat (1),
a first inflatable portion (5),
a second inflatable portion (7), said first and second inflatable portions (5, 7) being releasably attachable to each other and forming a part of an inflatable cushion (21), and
a first gas duct (9) fluidly connecting said inflator (27) to said second inflatable portion (7),
**characterized in that**
said first gas duct (9) is inflatable and configured to be mounted such that a portion (9a) thereof extends on the rear side of the seatback (15) of said vehicle seat (1), and **in that**
an upper part of said inflatable cushion (21) is attached to the seatback (15) of the vehicle seat (1) at upper attachment portions of the inflatable cushion (21) and a lower part of said inflatable cushion (21) is attached to the seatback (15) of the vehicle seat (1) at lower attachment portions of the inflatable cushion (21).

2. An occupant restraint system (3; 103) according to claim 1, wherein the length of said gas duct portion (9a) of the first gas duct (9) is at least 40 cm and more preferably at least 60 cm.

3. An occupant restraint system (3; 103) according to any one of the preceding claims, wherein said first gas duct (9), said first inflatable portion (5) and second inflatable portion (7) together form an airbag (21).

4. An occupant restraint system according to claim 1, wherein said occupant restraint system comprises a second inflatable gas duct fluidly connecting said inflator to said second inflatable portion.

5. An occupant restraint system (3; 103) according to claim 4, wherein said second gas duct is shorter than said first gas duct.

6. An occupant restraint system (3; 103) according to any one of the preceding claims, wherein said occupant restraint system comprises a gas guide (31) arranged to direct gas from the inflator (27) into each of the first and second inflatable portions (5, 7).

7. An occupant restraint system (3; 103) according to any one of the preceding claims, wherein said gas guide (31) is configured to direct a larger amount of gas into one of said inflatable portions (5, 7) than into the other one.

8. An occupant restraint system (3; 103) according to any one of the preceding claims, wherein said first and second inflatable portions (5, 7) are releasably attachable to each other by means of a zipper (11) and/or at least one buckle (33, 37).

9. An occupant restraint system (103) according to claim 8, wherein said occupant restraint system comprises a lap belt system (35).

10. An occupant restraint system (3; 103) according to any one of the preceding claims, wherein said occupant restraint system comprises one and only one inflator (27).

## Patentansprüche

1. Insassenrückhaltesystem (3; 103), Folgendes umfassend:
einen Fahrzeugsitz (1),
einen Gasgenerator (27), der für eine sichere Befestigung an dem Fahrzeugsitz (1) geeignet ist,
einen ersten aufblasbaren Abschnitt (5),
einen zweiten aufblasbaren Abschnitt (7), wobei der erste und der zweite aufblasbare Abschnitt (5, 7) lösbar aneinander befestigt werden können und einen Teil eines aufblasbaren Kissens (21) ausbilden, und
einen ersten Gaskanal (9), der den Gasgenerator (27) mit dem zweiten aufblasbaren Abschnitt (7) fluidisch verbindet,
**dadurch gekennzeichnet, dass**
der erste Gaskanal (9) aufblasbar ist und konfiguriert ist, um derart montiert zu werden, dass sich ein Abschnitt (9a) davon auf der Rückseite der Sitzlehne (15) des Fahrzeugsitzes (1) erstreckt, und dass
ein oberer Teil des aufblasbaren Kissens (21) an der Sitzlehne (15) des Fahrzeugsitzes (1) an oberen Befestigungsabschnitten des aufblasbaren Kissens (21) befestigt ist und ein unterer Teil des aufblasbaren Kissens (21) an der Sitzlehne (15) des Fahrzeugsitzes (1) an unteren Befestigungsabschnitten des aufblasbaren Kissens (21) befestigt ist.

2. Insassenrückhaltesystem (3; 103) nach Anspruch 1, wobei die Länge des Gaskanalabschnitts (9a) des ersten Gaskanals (9) wenigstens 40 cm und stärker bevorzugt wenigstens 60 cm beträgt.

3. Insassenrückhaltesystem (3; 103) nach einem der vorhergehenden Ansprüche, wobei der erste Gaskanal (9), der erste aufblasbare Abschnitt (5) und der zweite aufblasbare Abschnitt (7) zusammen einen Airbag (21) ausbilden.

4. Insassenrückhaltesystem nach Anspruch 1, wobei das Insassenrückhaltesystem einen zweiten aufblasbaren Gaskanal umfasst, der den Gasgenerator mit dem zweiten aufblasbaren Abschnitt fluidisch verbindet.

5. Insassenrückhaltesystem (3; 103) nach Anspruch 4, wobei der zweite Gaskanal kürzer als der erste Gaskanal ist.

6. Insassenrückhaltesystem (3; 103) nach einem der vorhergehenden Ansprüche, wobei das Insassenrückhaltesystem eine Gasführung (31) umfasst, die angeordnet ist, um Gas von dem Gasgenerator (27) in jeden des ersten und des zweiten aufblasbaren Abschnitts (5, 7) zu leiten.

7. Insassenrückhaltesystem (3; 103) nach einem der vorhergehenden Ansprüche, wobei die Gasführung (31) konfiguriert ist, um eine größere Gasmenge in einen der aufblasbaren Abschnitte (5, 7) als in den anderen zu leiten.

8. Insassenrückhaltesystem (3; 103) nach einem der vorhergehenden Ansprüche, wobei der erste und der zweite aufblasbare Abschnitt (5, 7) mittels eines Reißverschlusses (11) und/oder wenigstens einer Schnalle (33, 37) lösbar aneinander befestigt werden können.

9. Insassenrückhaltesystem (103) nach Anspruch 8, wobei das Insassenrückhaltesystem ein Beckengurtsystem (35) umfasst.

10. Insassenrückhaltesystem (3; 103) nach einem der vorhergehenden Ansprüche, wobei das Insassenrückhaltesystem einen und nur einen Gasgenerator (27) umfasst.

## Revendications

1. Système de retenue d'occupant (3 ; 103) comprenant
un siège de véhicule (1),
un gonfleur (27) pouvant être fixé à demeure audit siège de véhicule (1),
une première section gonflable (5),
une seconde section gonflable (7), lesdites première et seconde sections gonflables (5, 7) pouvant être attachées de manière libérable l'une à l'autre et formant une partie d'un coussin gonflable (21), et
un premier conduit de gaz (9) reliant fluidiquement ledit gonfleur (27) à ladite seconde section gonflable (7),
**caractérisé en ce**
**que** ledit premier conduit de gaz (9) est gonflable et conçu pour être monté de telle sorte qu'une section (9a) de celui-ci s'étend sur le côté arrière du dossier (15) dudit siège de véhicule (1), et en ce
**qu'**une partie supérieure dudit coussin gonflable (21) est attachée au dossier (15) du siège de véhicule (1) au niveau de sections d'attache supérieures du coussin gonflable (21) et qu'une partie inférieure dudit coussin gonflable (21) est attachée au dossier (15) du siège de véhicule (1) au niveau de sections d'attache inférieures du coussin gonflable (21).

2. Système de retenue d'occupant (3 ; 103) selon la revendication 1, la longueur de ladite section de conduit de gaz (9a) du premier conduit de gaz (9) étant d'au moins 40 cm et plus préférentiellement d'au moins 60 cm.

3. Système de retenue d'occupant (3 ; 103) selon l'une quelconque des revendications précédentes, ledit premier conduit de gaz (9), ladite première section gonflable (5) et la seconde section gonflable (7) formant ensemble un sac gonflable (21).

4. Système de retenue d'occupant selon la revendication 1, ledit système de retenue d'occupant comprenant un second conduit de gaz gonflable reliant fluidiquement ledit gonfleur à ladite seconde section gonflable.

5. Système de retenue d'occupant (3 ; 103) selon la revendication 4, ledit second conduit de gaz étant plus court que ledit premier conduit de gaz.

6. Système de retenue d'occupant (3 ; 103) selon l'une quelconque des revendications précédentes, ledit système de retenue d'occupant comprenant un guide de gaz (31) agencé de manière à diriger le gaz issu du gonfleur (27) dans chacune des première et seconde sections gonflables (5, 7).

7. Système de retenue d'occupant (3 ; 103) selon l'une quelconque des revendications précédentes, ledit guide de gaz (31) étant conçu pour diriger une plus grande quantité de gaz dans l'une desdites sections gonflables (5, 7) que dans l'autre.

8. Système de retenue d'occupant (3 ; 103) selon l'une quelconque des revendications précédentes, lesdites première et seconde sections gonflables (5, 7) pouvant être attachées de manière libérable l'une à l'autre au moyen d'une fermeture à glissière (11) et/ou d'au moins une boucle (33, 37).

9. Système de retenue d'occupant (103) selon la revendication 8, ledit système de retenue d'occupant comprenant un système de ceinture ventrale (35).

10. Système de retenue d'occupant (3 ; 103) selon l'une quelconque des revendications précédentes, ledit système de retenue d'occupant comprenant un seul et unique gonfleur (27).
